# EUROPEAN PATENT SPECIFICATION

(11) **EP 1 490 723 B1**
(45) Date of publication and mention of the grant of the patent: **15.02.2006**
(21) Application number: 03743427.1
(22) Date of filing: 04.03.2003
(51) Int. Cl.: G02B 27/64, G03B 17/56

(54) **STABILIZING DEVICE**
STABILISIERUNGSEINRICHTUNG
DISPOSITIF STABILISATEUR

(30) Priority: 04.03.2002 GB 0204996
(43) Date of publication of application: 29.12.2004
(73) Proprietor: Quinn, Terence John, 92310 Sèvres (FR)
(72) Inventor: Quinn, Terence John, 92310 Sèvres (FR)
(74) Representative: Murgatroyd, Susan Elizabeth
(86) International application number: PCT/GB2003/000916
(87) International publication number: WO 2003/075075

(56) References cited:
- GB-A- 2 160 995
- US-A- 5 617 159
- US-B1- 6 188 849

## Description

The present invention relates to a stabilizing device for a handheld camera, binoculars or other handheld optical instrument for reducing shake or wobble in the image that comes from shake or wobble in the hand of the person holding the instrument.

Handheld still photography and filmmaking has always suffered from the problem of camera shake or wobble. The user is unable to isolate the instrument being held from the inevitable movements that occur when filming and these movements are reproduced in the resulting image and are magnified on projection or on a television screen. Still images taken with focal-length lenses are often blurred owing to such movements. Binoculars also suffer from similar problems that severely limit the useful magnification when they are handheld.

Existing devices for reducing shake or wobble in handheld instruments are often cumbersome, involve an unwieldy body harness or are far too expensive for an amateur or independent professional. In the professional world, heavy movie cameras are rested on the shoulder or, alternatively, the complex "steadicam" system, which is a body harness, may be used effectively to reduce shake or wobble but, in this case, movement is constricted. Most such systems restrict the degree of movement in certain planes and directions.

With the increase in use of small, professional digital cameras, which are becoming an industry standard such as the Sony PD 150, and the quality of whose images almost match those of the larger cameras, the problem of shake has reasserted itself and it is urgent to find a cost-effective solution. The problem has arisen because such small cameras lack the inherent inertia of the large heavy ones and they are, therefore, much more susceptible to shake or wobble coming from the hand of the user. This has always been the problem with 35 mm still cameras and small binoculars.

GB-A-2160995 discloses a stabilizing device for an optical instrument having two rigid members projecting downwardly from a block held in a mounting which is to be screwed to the underside of the optical instrument. Each rigid member has a weight at its outer end and the device can have two or more weights.

An object of the present invention is to provide a stabilizing device for a handheld camera, binoculars or other optical instrument that greatly reduces the above-mentioned problems.

To this end, the invention consists in a stabilizing device for a handheld camera, binoculars or other optical instrument, having an array of at least three rods projecting from a base adapted to be secured to the optical instrument, said rods being of substantially equal length and having weights at their outer ends arranged substantially in a common plane, characterised by a pistol grip attached underneath the base, and the centre of mass of the whole device including the optical instrument being substantially at the top of the pistol grip.

The invention relies on the natural inertia of the mass of the weights so that the rigid structure of rods, the weight masses and optical instrument secured to the base has an inertia that opposes any rapid rotation in any plane or about any axis.

The least strain on the hand is obtained when the centre of mass of the whole system or assembly is at the top of the pistol grip.

The plane may be vertical, horizontal or at any angle inclined to the base. The mass of each weight is usually, but not necessarily, equal. The camera is preferably a still or film camera.

In a modification, one of the weights is a support.

In a preferred embodiment, the device comprises an array of three weights rigidly held at the ends of rigid rods that are rigidly connected to and projecting from the base upon which the optical instrument is securely fixed, said rods being of substantially equal length and lying at approximately one hundred and twenty degrees from each other in the plane, each weight thus being approximately at the apex of an equilateral triangle.

The inertia of the structure does not oppose any smooth slow movement so that the device effectively acts as a "moving tripod" which stabilises the optical instrument to enable the user, for example to pan, tilt up or down, move sideways, walk, move their body up or down whilst obtaining steady images with shake or wobble much reduced.

The invention is believed to have enormous potential for the amateur and professional market and military. It enables people who dislike seeing their valuable pictures suffer from shake or wobble but who need the flexibility of handheld camerawork to produce seamless images which make home videos look as though they were shot with expensive tracking equipment. The smaller the camera, the more effective is the device in improving the image. It will enable news, current affairs and "fly-on-the wall" documentary makers who wish to use the new small cameras to work in ways that are impossible with larger cameras. It will also enable demanding users of high power binoculars such as wildlife watchers to make much better use of the optical power that modern binoculars provide. As the device is totally passive, there are no problems of batteries running down in locations where such things are impossible to obtain. A variant of the device has one arm resting on the ground and the two remaining weights arranged so that horizontal shake and wobble is reduced while allowing completely free horizontal movement and some up and down inclination. This option would be particularly useful for users of still cameras and binoculars photographing or observing distant objects at ground level.

In all cases, the rods must be rigid and be rigidly attached to the base when the device is in use and the optical instrument must be rigidly secured to the base. The weights must also be rigidly fixed to the rods.

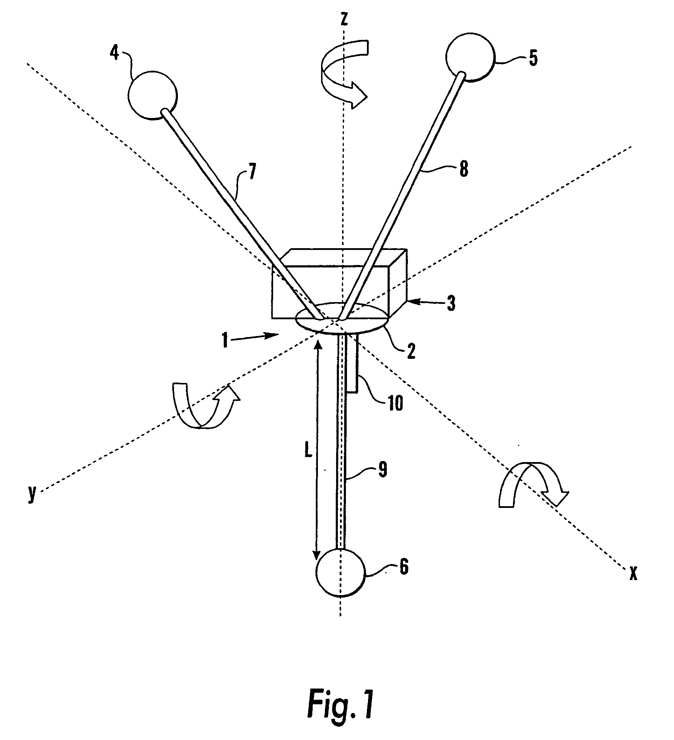

Reference is now made to Figure 1 of the accompanying drawings, in which the efficiency of the illustrated device 1 in reducing shake and wobble is proportional to the moment of inertia of the assembly (i.e. the device plus optical instrument) about perpendicular axes x, y, z which pass through the base 2 upon which the optical instrument 3 is fixed. The moment of inertia of the assembly is proportional to the sum of moments of inertia of each weight 4, 5, 6 about the base, which is given by ML² where M is the mass of all the weights 4, 5, 6 together and L is the length of each rod 7, 8, 9. The length of the rods and the mass of the weights may be chosen to suit the application. The greater the required reduction in shake and wobble the larger must be the product ML², obtained by increasing either M or L.

Embodiments of the present invention will now be described, by way of example, with reference to the accompanying drawings, in which:-
Figures 1 to 3 are schematic isometric, front and side views, respectively, of a first embodiment of the invention with an optical instrument secured to it;
Figure 4 is a side view of a rod usable for the device;
Figure 5 is a schematic view of a base of the device;
Figure 6 is a schematic isometric view of a second embodiment with an optical instrument secured to it; and
Figure 7 is a modified rod for the second embodiment.

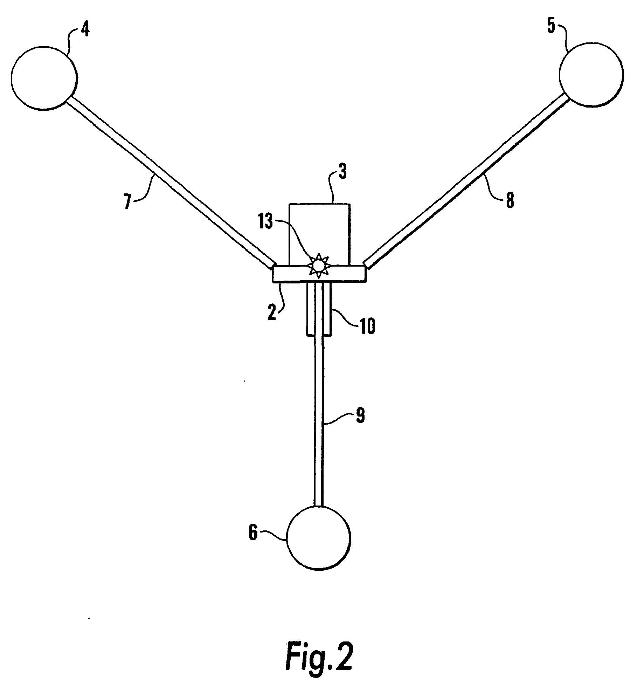

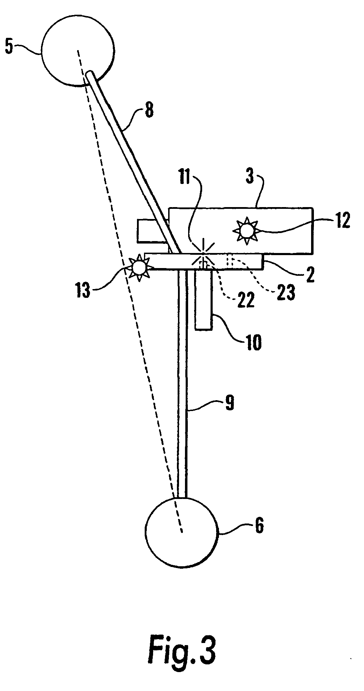

Figures 1, 2 and 3 illustrate one practical design of the device 1. In this example the rods 7, 8, 9 each have a length of about 50 centimetres and each weight 4, 5, 6, has a mass of about 200 grams. All the weights 4, 5, 6 are arranged in a common plane. This arrangement is suitable for ordinary use with a Sony PD 150 camera 3. The two upper rods 7, 8 lean forward so that they do not interfere with part of the Sony camera 3, which protrudes from the side. The inclination of the plane of the weights does not alter in any way the efficiency of the device. The device has a pistol grip 10 attached to a hole 22 in the underside of the base 2 upon which the camera 3 is secured and the centre of mass 11 of the whole assembly is just at the top end of the pistol grip 10. This is arranged by fixing the centre of mass 12 of the camera to be at such a distance behind the pistol grip 10 that it balances the centre of mass 13 of the three weights which is in front of the pistol grip (see Figure 3).

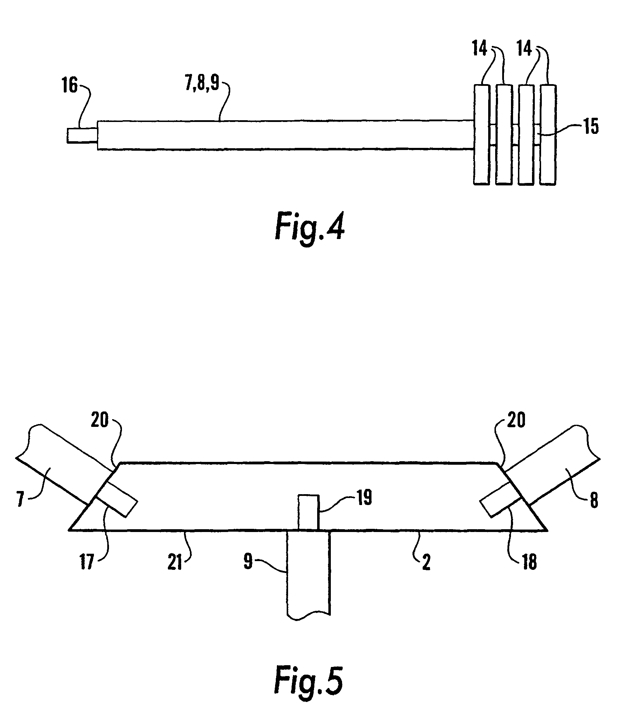

In this example, each weight 4, 5, 6 is made up of a number of individual disks 14 that are screwed onto a screw thread 15 at one end of the rod 7, 8, 9 (see Figure 4). By having the weights made in this way it is easy to alter the total mass of the weight by adding or taking off disks. The opposite end of the rod has a screw 16 for screwing into a threaded hole 17, 18, 19 in the base 2 (see Figure 5) to enable the rod to be attached to the base. Each hole 17, 18, 19 is formed perpendicularly to its adjacent surface with two holes 17, 18 each formed in an inclined side 20 of the base and another hole 19 formed in the lower face 21 of the base, the base being frusto-conical. The base 2 has a threaded hole 23 (see Figure 3) passing all the way through it so that a screw (not shown) coming up from below the base enables the camera 3 to be held to the base 2 and this hole 23 is located to the rear of the hole 22 for the pistol grip 10.

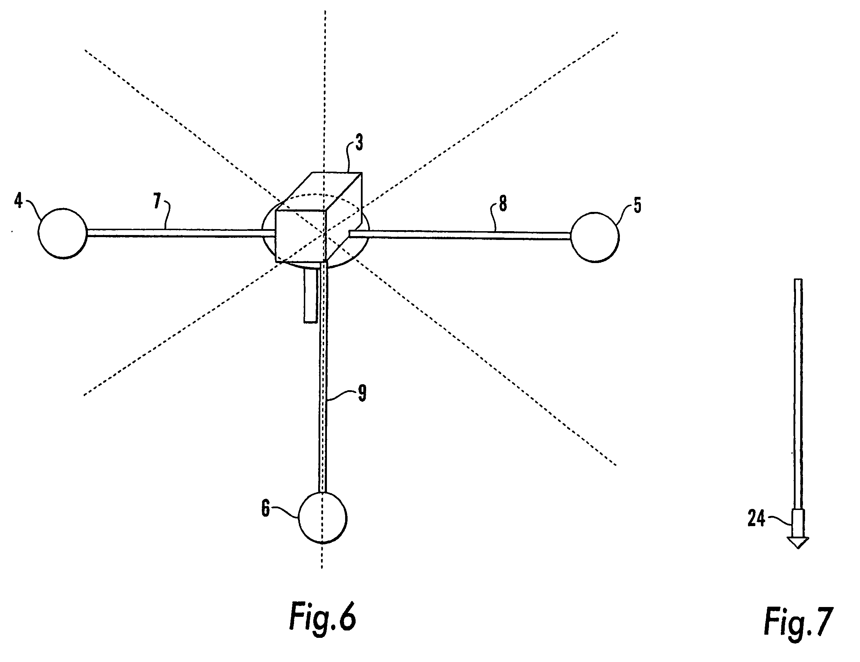

Figure 6 shows an alternative embodiment in which the camera 3 or other optical instrument is at the same level as the two upper weights 4, 5 which are fixed at the ends of horizontal rods 7, 8. This is convenient when the optical instrument is being used to photograph or observe a distant object near ground level. In a modification for use where the observer does not need to move around, the lower rod 9 may have its weight 6 replaced by a support 24 (as indicated in Figure 7) directly on the ground so that the device only has two weights. This has the advantage that the weight of the whole assembly rests on the ground but the horizontal shake or wobble that would otherwise still remain is reduced by the inertia of the horizontal rods and weights.

Whilst particular embodiments have been described, it will be understood that various modifications may be made without departing from the scope of the invention. For example, the base 2 may be a rectangular plate with inclined sides.

## Claims

1. A stabilizing device (1) for a handheld camera, binoculars or other optical instrument (3), having an array of at least three rods (7,8,9) projecting from a base (2) adapted to be secured to the optical instrument, said rods being of substantially equal length and having weights (4,5,6) at their outer ends arranged substantially in a common plane, **characterised by** a pistol grip (10) attached underneath the base (2), and the centre of mass (11) of the whole device including the optical instrument (3) being substantially at the top of the pistol grip (10).

2. The device as claimed in claim 1, wherein the plane is vertical, horizontal or at any angle inclined to the base (2).

3. The device as claimed in claim 1 or 2, wherein the mass of each weight (4,5,6) is equal.

4. The device as claimed in claim 1, 2 or 3, wherein the centre of gravity of each weight (4,5,6) is substantially in the common plane.

5. The device as claimed in any preceding claim, including means (14,15) for changing the mass of at least one of the weights (4,5,6).

6. The device as claimed in any preceding claim, wherein all the rods (7,8,9) are disposed in said common plane.

7. The device as claimed in any preceding claim, including an array of three weights (4,5,6) rigidly held at the ends of said rods (7,8,9), said rods lying at substantially one hundred and twenty degrees from each other in said plane, thereby each weight being substantially at the apex of an equilateral triangle.

8. The device as claimed in any preceding claim, wherein one of the weights and its associated rod comprises a support (24) for the device.

9. The device as claimed in any preceding claim, wherein the rods (7,8,9) are rigid and are removably attached to the base (2).

## Patentansprüche

1. Stabilisierungsvorrichtung (1) für eine tragbare Kamera, Fernglas oder anderes optisches Instrument (3), welche eine Anordnung von mindestens 3 Stäben aufweist (7, 8, 9), welche von einer Basis (2) ausgehen und angepasst, das optische Instrumente zu halten, wobei die Stäbe im Wesentlichen gleich lang sind und Gewichte (4, 5, 6) an ihren äußeren Enden aufweisen, welche im Wesentlichen auf der gleichen Ebene angeordnet sind, **dadurch gekennzeichnet, dass** einen Handgriff (10), welcher unterhalb der Basis (2) angeordnet ist, und ein Massenschwerpunkt (11) der gesamten Vorrichtung einschließlich des optischen Instrumentes (3), welcher sich im Wesentlichen oberhalb des Handgriffs befindet (10).

2. Vorrichtung nach Anspruch 1, worin die Ebene vertikal, horizontal oder in jedem beliebigen Winkel geneigt zu der Basis (2) ist.

3. Vorrichtung nach Anspruch 1 oder 2, worin die Masse eines jeden Gewichts (4, 5, 6) gleich ist.

4. Vorrichtung nach Anspruch 1, 2 oder 3, worin der Schwerpunkt eines jeden Gewichtes (4, 5, 6) im Wesentlichen in der gleichen Ebene liegt.

5. Vorrichtung nach einem der vorangegangenen Ansprüche, welche Mittel (14, 15) zum Verändern der Masse von mindestens einem der Gewichte (4, 5, 6) aufweist.

6. Vorrichtung nach einem der vorangegangen Ansprüche, worin alle Stäbe (7, 8, 9) auf der gleichen Ebene geneigt sind.

7. Vorrichtung nach einem der vorangegangen Ansprüche, welche eine Anordnung von drei Gewichten (4, 5, 6) aufweist, die fest an einem Ende der Stäbe (7, 8, 9) gehalten sind, wobei die Stäbe zueinander im Wesentlichen im Winkel von 120 Grad in der Ebene angeordnet sind, wodurch jedes der Gewichte im Wesentlichen auf dem Scheitelpunkt eines gleichschenkligen Dreiecks angeordnet ist.

8. Vorrichtung nach einem der vorangegangen Ansprüche, worin eines der Gewichte und der dazugehörige Stab einen Instrumentträger (24) für die Vorrichtung aufweist.

9. Vorrichtung nach einem der vorangegangen Ansprüche, worin die Stäbe (7, 8, 9) fest und abnehmbar mit der Basis (2) verbunden sind.

## Revendications

1. Dispositif stabilisateur (1) pour une caméra portative, des jumelles ou autre instrument d'otique (3), présentant un ensemble d'au moins trois tiges (7, 8, 9) dépassant d'une base (2) conçue pour être fixée à l'instrument d'optique, lesdites tiges étant sensiblement de longueur égale et présentant des poids (4, 5, 6) à leurs extrémités extérieures disposés sensiblement dans un même plan, **caractérisé par** une poignée pistolet (10) fixée au dessous de la base (2), et le centre de gravité (11) du dispositif au complet y compris l'instrument d'optique (3) se trouvant sensiblement sur le sommet de la poignée pistolet (10).

2. Dispositif selon la revendication 1, dans lequel le plan est vertical, horizontal, ou formant un angle quelconque incliné vers la base (2).

3. Dispositif selon la revendication 1 ou 2, dans lequel les masses de chacun des poids (4, 5, 6) sont égales.

4. Dispositif selon la revendication 1, 2 ou 3, dans lequel les centres de gravité de chacun des poids (4, 5, 6) sont sensiblement dans un plan commun.

5. Dispositif selon l'une quelconque des revendications précédentes, comportant un moyen (14, 15) pour modifier la masse d'au moins l'un des poids (4, 5, 6).

6. Dispositif selon l'une quelconque des revendications précédentes, dans lequel toutes les tiges (7, 8, 9) sont disposées dans ledit plan commun.

7. Dispositif selon l'une quelconque des revendications précédentes, comportant un ensemble de trois poids (4, 5, 6) rigidement maintenus aux extrémités desdites tiges (7, 8, 9), lesdites tiges se trouvant sensiblement à cent vingt degrés les unes des autres dans ledit plan, chaque poids se trouvant de la sorte sensiblement au sommet d'un triangle équilatéral.

8. Dispositif selon l'une quelconque des revendications précédentes, dans lequel l'un des poids et sa tige associée comprend un support (24) pour le dispositif.

9. Dispositif selon l'une quelconque des revendications précédentes, dans lequel les tiges (7, 8, 9) sont rigides et sont fixées à la base (2) de façon amovible.
